# EUROPEAN PATENT APPLICATION

(11) **EP 1 401 078 A1**
(43) Date of publication of application: **24.03.2004**
(21) Application number: 02256492.6
(22) Date of filing: 19.09.2002
(51) Int. Cl.: H02J 7/02

(54) **Charging circuit of storage/discharging device comprised of multi-differential source**

(71) Applicant: Tai-Her, Yang, Si-Hu Town Dzan-Hwa (TW)
(72) Inventor: Tai-Her, Yang, Si-Hu Town Dzan-Hwa (TW)
(74) Representative: Pratt, David Martin

(57) **Abstract**

A circuit of multiple units of step differential DC source to detect charging current and terminal voltage of a storage/discharging device, or to detect charging temperature so to control operation of control switches respectively connected in series with each unit of the DC source to change charging voltage orcharging current to the storage/discharging device; orbymeans of a central control unit or amanual operation interface to set up the automatic cutoff time to change its charging voltage when preset time is up so to adjust and control its charging current or cutoff current.

## Description

### BACKGROUND OF THE INVENTION

### (a) Field of the Invention

The present invention relates to a storage/discharging device charging circuit of multiple units of differential source, and more particularly to a DC source with step voltage respectively connected in series with mechanic-electronic or solid-state switching device to form a unit of switching device to constitute one terminal of a charging source at the output terminal of the unit of switching device to be set by means of a manually controlled interface; and feedback signals comprised that of a charging current of a storage/discharging device on a load side being charged together with that of voltage and temperature rise from the charging terminal are transmitted to a central control unit, where in turn a switching operation is executed by a corresponding mechanic-electronic or the solid-state switching device provided in the central control unit to change its charging voltage and charging current values to the storage/discharging device or cut off the charging source delivered to the storage/discharging device when the charging is saturated or arrives at the preset temperature rise.

### (b) Description of the Prior Art:

The charging source for a conventional DC charging device usually relates to a single voltage source having its averaged output voltage changedbymeans of pulse-widthmodulation (PWM). However, comparatively larger electromagnetic interference (EMI) and output pulse are observed.

### SUMMARY OF THE INVENTION

The primary purpose of the present invention is to provide a charging circuit that reduces output pulse and EMI by means of alternative output in mode of lower to higher voltage or vice versa from multiples of charging source with different voltages. To achieve the purpose, multiples of step differential DC source to detect the charging current and terminal voltage of storage/discharging device being charged or to detect the charging temperature to control the operation of the switch connected in series with each DC source, thus to change the charging voltage or current of the charging device or to execute setup of automatic cut-off time by means of a central control unit or manually controlled interface so to change its charging voltage when the preset time is up for adjusting and controlling or cutting off its charging current.

### BRIEF DESCRIPTION OF THE DRAWINGS

Fig. 1 is a block chart of a basic circuit of a first preferred embodiment of the present invention,
Fig. 2 is a block chart of a DC source comprised of step voltage DC source with various voltage draws derived from the first preferred embodiment of the present invention illustrated in Fig. 1,
Fig. 3 is a block chart of a circuit of a DC source comprised of storage/discharging device of a single voltage (dis)chargeable secondary batteries or a super capacitor derived from the first preferred embodiment of the present invention as illustrated in Fig. 1,
Fig. 4 is a block chart of a second preferred embodiment of a manually controlled and operated circuit of the present invention,
Fig. 5 is a block chart of a manually controlled and operated circuit of DC source comprised of the DC source of step voltage with various voltage draws derived from the second preferred embodiment of the present invention illustrated in Fig. 4,
Fig. 6 is a block chart of a manually controlled and operated circuit of DC source comprised of storage/discharging device of a single voltage (dis)chargeable secondary batteries or a super capacitor derived from the second preferred embodiment of the present invention illustrated in Fig. 4,
Fig. 7 is a block chart of a third preferred embodiment of the present invention provided with multiple units of output circuit,
Fig. 8 is a block chart of multiple units of output circuit of a DC source comprised of DC source of step voltage with various voltage draws derived from the third preferred embodiment of the present invention illustrated in Fig. 7,
Fig. 9 is a block chart of a multiple unit of output circuit of a DC source comprised of a storage/discharging device of a single voltage (dis) chargeable secondary batteries or a super capacitor derived from the third preferred embodiment of the present invention illustrated in Fig. 7,
Fig. 10 is a schematic view of step variation mode executed between low voltage and high voltage of the charging output voltage from the charging source of the present invention,
Fig. 11 is a schematic view of linear voltage variation of proportional cycle that can be adjusted and controlled as executed between the low voltage and the high voltage sources of the charging output from the charging source of the present invention, and
Fig. 12 is a schematic view showing a pulse-width modulation ( PWM) output voltage control mode of the charging output voltage from the charging voltage of the present invention.

### DETAILED DESCRIPTION OF THE PREFERRED EMBODIMENTS

A charging circuit for a storage/discharging device of multiple units of differential source of the present invention relates to a DC source with multiple units of step voltage respectively connected in series with mechanic-electronic or solid-state switching device to form a unit of switching device to constitute one terminal of a charging source at the output terminal of the unit of switching device to be set by means of a manually controlled interface; and feedback signals comprised that of a charging current of a storage/discharging device on a load side being charged together with that of voltage and temperature rise from the charging terminal are transmitted to a central control unit, where in turn a switching operation is executed by a corresponding mechanic-electronic or the solid-state switching device provided in the central control unit to change its charging voltage and charging current values to the storage/discharging device or cut off the charging source delivered to the storage/discharging device when the charging is saturated or arrives at the preset temperature rise.

The mechanic-electronic or solid-state switching device connected in series with each step voltage DC source can be further comprised of two or more than two mechanic-electronic or solid-state switching devices are connected in parallel, then individually connected in series with each step voltage DC source. Within, each unit of the mechanic-electronic or solid-state switching devices connected in parallel and then in series with the individual step voltage DC source constitutes a common unit of switching device and a common output terminal of the charging circuit. Furthermore, the multiple units of mechanic-electronic or solid-state switching devices are connected in parallel, then individually connected in series with each step voltage DC source further constitutes multiple units of switching devices to from a charging source of multiple units of output.
With the preferred embodiment of a single unit of switching device of a storage/discharging device charging circuit from multiple units of differential source of the present invention, it is'given detailed description as follows:

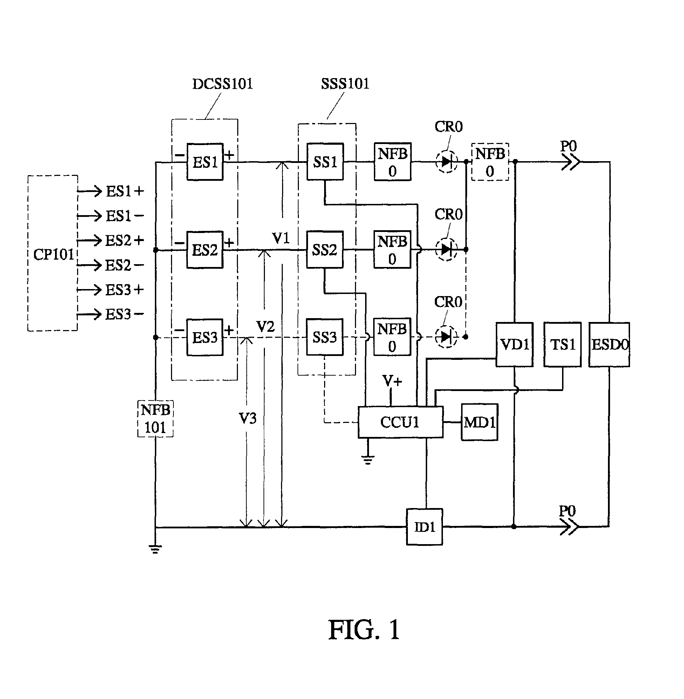

Fig. 1 shows a block chart of a basic circuit of the present invention, within, the basic circuit is essentially comprised of:
- A step voltage DC source DCSS101: including DC sources ES1, ES2, ES3...of various voltage comprised of multiple units of storage/discharging device of a (dis)chargeable secondary batteries or a super capacitor or any other source containing direct current; within, the DC source ES1 has a greater voltage than that of ES2, and the DC source ES2 has a greater voltage than that of ES3, and so on if more step voltage DC sources are provided, or the step voltage DC source DCSS101 is comprised of DC source availed from single phase or multi-phase city power or AC generator source having been directly rectified or transformed, or other DC source;
- A unit of switching device SSS101: comprised of a mechanic-electronic or solid-state switching device SS1, SS2, SS3...etc. to be respectively connected in series with an output terminal of a storage/discharging device subject to control by a central control unit CCU1 for on-of f operation, thus to control DC sources ES1, ES2, ES3...comprised of a storage/discharging device or any other source of DC electric energy, and finally to change a charging current or stop charging to a load side storage/discharging device ESD0 commonly adapted to the DC sources ES1, ES2, ES3...etc.;
- An isolating diode CR0: comprised of a solid-state rectifying diode to be individually connected in series with the output terminal of each DC source so to prevent the formation of inverse current by its neighboring DC source of higher voltage; within, the isolating diode CR0 is optional on the output side of the DC source of the highest step, and the isolating diode CR0 is not required when the mechanic-electronic or the solid-state switching devices SS1, SS2, SS3...is each provided with inherited inverse voltage withstanding feature;
- A load side storage/discharging device ESD0: related to the storage/discharging device provided on the load side being charged that is comprised of any type of (dis)chargeable secondary batteries or super capacitor;
- A central control unit CCU1: related to a digital or analog central control circuit comprised of a mechanic-electronic or a solid-state electronic device, or comprised of a micro-processor and related software subject to operation and setup by a manual operation interface MDland by referring to feedback from a loading voltage detection device VD1, a loading current detection device ID1 and a loading temperature detection device TS1 to control the operation of a mechanical-electronic or asolid-stateswitching device of the unit of the switching device SSS101, thus to control the operation of the step voltage DC source DCSS101 to charge or stop charging the storage/discharging device; or to control the operation of the step voltage DC source DCSS101 to charge or stop charging the storage/discharging device when the preset time is up by way of setting the automatic cut-off time or by control of the software;
- A manual operation interface MD1: related to a digital or analog manual operation interface comprised of mechanic-electronic or solid-state electronic circuit subject to manual operation for the control of the charging circuit ofstorage/discharging deviceofmulti-differential source of the present invention through the central control unit CCU1 to specify the charging to the load side storage/discharging device ESD0; or to control the operation of the step voltage DC source DCSS101 to charge or stop charging the storage/discharging device when the preset time is up by way of setting the automatic cut-off time or by control of the software;
- A charging source CP101: comprised of multi-phase or single phase AC rectified DC source, or of DC source so that when DC sources ES1, ES2, ES3...etc of multiple units of voltage are comprised of the storage/discharging device, a make-up charging electric energy is supplied to the storage/ discharging device from the charging source CP101;
- A load side voltage detection device VD1: related to a digital or analog voltage detection device comprised of mechanic-electronic or solid-state electronic circuit for detecting the terminal voltage of load side storage/discharging device ESD0 and delivering the terminal voltage to the central control unit CCU1; the load side voltage detection device VD1 is optional;
- A load current detection device ID1: related to a digital or analog current detection device comprised of mechanic-electronic or solid-state electronic circuit for detecting the input/output current of load side storage/discharging device ESD0 and delivering the input/output current to the central control unit CCU1; the load side voltage detection device VD1 is optional;
- A load temperature detection device TS1: an optional load temperature detection device comprised of non-contact type such as infrared induction or contact type detection device including thermal coupler, or positive or negative temperature coefficient detection device for detecting the temperature of the load side storage/discharging device ESD0, then the reading is either forthwith transmitted or via a digital or analog circuit comprised of related circuits incorporated to the central control unit CCU1;
- An interface connector or plug/socket unit P0: an optional device comprised of a mechanic-electronicstructure,within, one terminal connecting the power side charging source and related circuits, and the other terminal relatively coupled being conducted to the load side storage/discharging device ESD0 and related circuits, or is provided at the same time with the function of electro-mechanical or electronic or mechanical specific ID code;
- A mains circuit breaker NFB101: an optional device comprised of an over current circuit breaker operated by manual or by thermal drive or by electromagnetic or flow force to be connected in series on the output side of the mains; and
- A load side over-current circuit breaker NFB0: an optional device comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

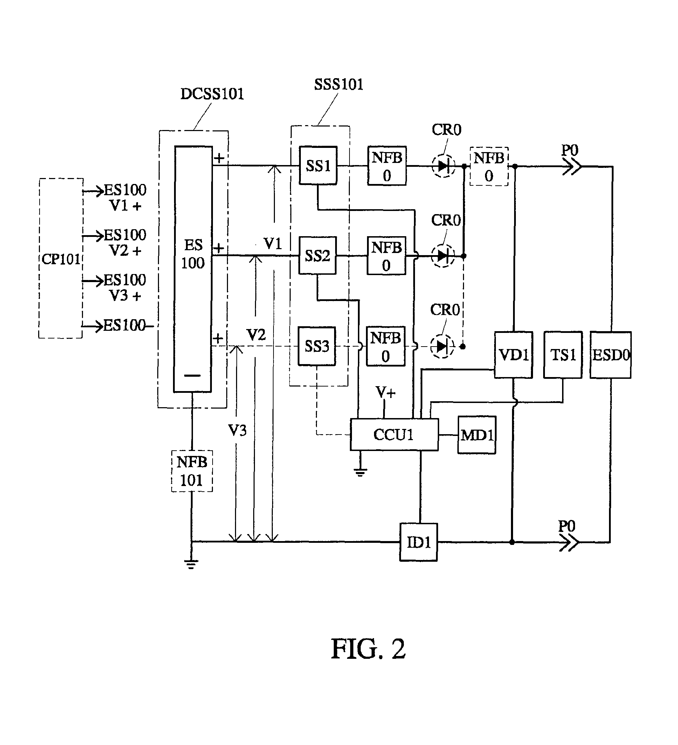

The step voltage DC source as illustrated in Fig. 1 may be further substituted by a storage/discharging device of (dis) chargeable secondary batteries or super capacitor, or other step voltage DC source ES100 of various voltage draw comprised of a DC source provided with DC electric energy as illustrated in Fig. 2, within, voltages of the various voltage draws indicate V1>V2/V3...and so on. Fig. 2 shows a block chart of a DC source comprised of step voltage DC source with various voltage draws derived from the first preferred embodiment of the present invention illustrated in Fig. 1, within, its peripheral circuits and operational control are the same as that illustrated in Fig. 1.

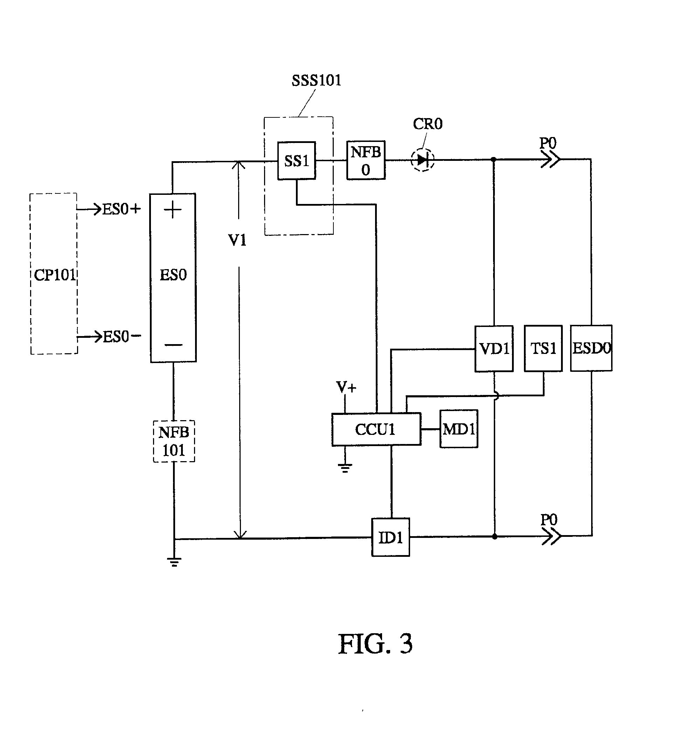

In another preferred embodiment yet derived from the step voltage DC source as illustrated in Fig. 1, the step voltage DC source is substituted with a storage/discharging device ES0 comprised of a single voltage (dis)chargeable secondary batteries or super capacitor. Fig. 3 shows a block chart of a circuit of a DC source comprised of storage/discharging device of a single voltage (dis)chargeable secondary batteries or a super capacitor derived from the first preferred embodiment of the present invention as illustrated in Fig. 1, it is essentially comprised of:
- A single voltage DC source: comprised of a storage/discharging device ES0 of (dis)chargeable secondary batteries or super capacitor with a given voltage;
- A unit of switching device SSS101: comprised of the mechanic-electronic or solid-state switching device SS1 to be connected in series for operation with the output terminal of the storage/discharging device ES0 of (dis)chargeable secondary batteries or super capacitor, and to execute On-Of f operation subject to the central control unit CCU1 so to control the charging current supplied to the load side storage/discharging device ESD0 to execute the control of the time of charging input or intermittent charging input or to stop the charging;
- An isolating diode CR0: comprised of a solid-state rectifying diode to be individually connected in series with the output terminal of each DC source so to prevent the formation of inverse current by its neighboring DC source of higher voltage; within, the isolating diode CR0 is optional on the output side of the DC source of the highest step, and the isolating diode CR0 is not required when the mechanic-electronic or the solid-state switching devices SS1, SS2, SS3...is each provided with inherited inverse voltage withstanding feature;
- A load side storage/discharging device ESD0: related to the storage/discharging device provided on the load side being charged that is comprised of any type of (dis)chargeable secondary batteries or super capacitor;
- A central control unit CCU1: related to a digital or analog central control circuit comprised of a mechanic-electronic or a solid-state electronic device, or comprised of a micro-processor and related software subject to operation and setup by a manual operation interface MD1 and by referring to feedback from a loading voltage detection device VD1, a loading current detection device ID1 and a loading temperature detection device TS1 to control the operation of a mechanical-electronic or asolid-stateswitching device of the unit of the switching device SSS101, thus to control the operation of the step voltage DC source DCSS101 to charge or stop charging the storage/discharging device; or to control the operation of the step voltage DC source DCSS101 to charge or stop charging the storage/discharging device when the preset time is up by way of setting the automatic cut-off time or by control of the software;
- A manual operation interface MD1: related to a digital or analog manual operation interface comprised of mechanic-electronic or solid-state electronic circuit subject to manual operation for the control of the charging circuit ofstorage/discharging device of multi-differential source of the present invention through the central control unit CCU1 to specify the charging to the load side storage/discharging device ESD0; or to control the operation of the step voltage DC source DCSS101 to charge or stop charging the storage/discharging device when the preset time is up by way of setting the automatic cut-off time or by control of the software;
- A charging source CP101: comprised of multi-phase or single phase AC source rectified DC source or a DC source for supplying make-up charging electric energy to the storage/discharging device ESOof (dis)chargeablesecondary batteries or super capacitor;
- A load side voltage detection device VD1: related to a digital or analog voltage detection device comprised of mechanic-electronic or solid-state electronic circuit for detecting the terminal voltage of load side storage/discharging device ESD0 and delivering the terminal voltage to the central control unit CCU1; the load side voltage detection device VD1 is optional;
- A load current detection device ID1: related to a digital or analog current detection device comprised of mechanic-electronic or solid-state electronic circuit for detecting the input/output current of load side storage/discharging device ESD0 and delivering the input/output current to the central control unit CCU1; the load side voltage detection device VD1 is optional;
- A load temperature detection device TS1: an optional load temperature detection device comprised of non-contact type such as infrared induction or contact type detection device including thermal coupler, or positive or negative temperature coefficient detection device for detecting the temperature of the load side storage/discharging device ESD0, then the reading is either forthwith transmitted or via a digital or analog circuit comprised of related circuits incorporated to the central control unit CCU1;
- An interface connector or plug/socket unit P0: an optional devicecomprised of a mechanic-electronicstructure,within, one terminal connecting the power side charging source and related circuits, and the other terminal relatively coupled being conducted to the load side storage/discharging device ESD0 and related circuits, or is provided at the same time with the function of electro-mechanical or electronic or mechanical specific ID code;
- A mains circuit breaker NFB101: an optional device comprised of an over current circuit breaker operated by manual or by thermal drive or by electromagnetic or flow force to be connected in series on the output side of the mains; and
- A load side over-current circuit breaker NFB0: an optional device comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

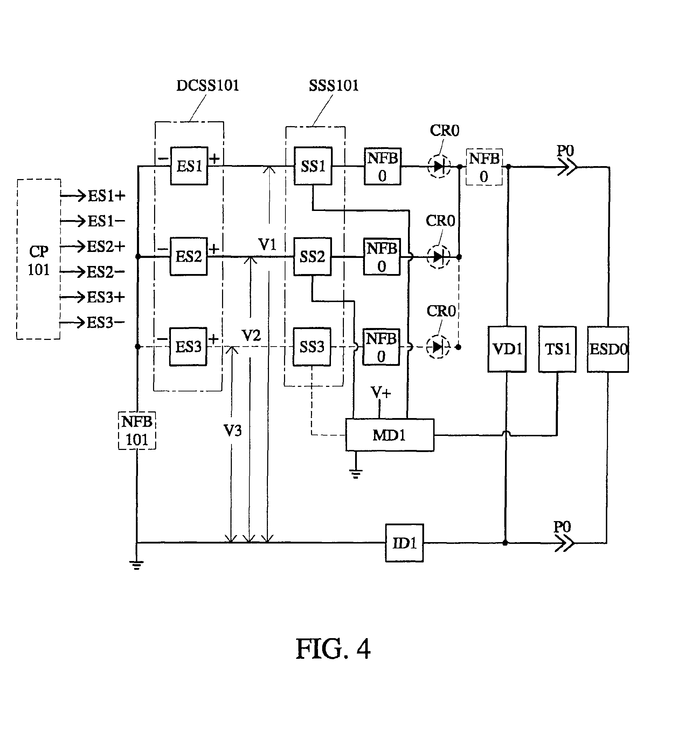

For considerations of cost and use intensity, the charging circuit for the storage/discharging device of multi-differential source may be comprised for manual operation as illustrated in Fig. 4 by eliminating the central control unit CCU1 from a system as illustrated in Fig. 1 and a mechanic-electronic or solid-state switching device for direct manual operation or a manual operation interface MD1 driven bymanually controlled electromagnetic ormechanic or flow force is selected instead. During the manual operation, the operator refer to part or all the values read from the load voltage detection device VD1, the load current detect device ID1 and the load temperature detection device TS1, the either forthwith operated by manual or by means of the manual operation interface MD1 to control electromagnetic or mechanic or flow force to drive the mechanic-electronic or solid-state switching devices SS1, SS2, SS3... etc. provided in the switching device SSS101. Fig. 4 shows a block chart of a circuit of the present invention by manual operation and the same operation mode applies to both of single unit and multiple units of load side storage/discharging device. The circuit as illustrated in Fig. 4 is essentially comprised of:
- A step voltage DC source DCSS101: including DC sources ES1, ES2, ES3...of various voltage comprised of multiple units of storage/discharging device of a (dis)chargeable secondary batteries or a super capacitor or any other source containing direct current; within, the DC source ES1 has a greater voltage than that of ES2, and the DC source ES2 has a greater voltage than that of ES3, and so on if more step voltage DC sources are provided, or the step voltage DC source DCSS101 is comprised of DC source availed from single phase or multi-phase city power or AC generator source having been directly rectified or transformed, or other DC source;
- A unit of switching device SSS101: comprised of a mechanic-electronic or solid-state switching device SS1, SS2, SS3...etc. to be respectively connected in series with an output terminal of a storage/discharging device subject to control by the manual operation interface MD1 for on-off operation, thus to control DC sources ES1, ES2, ES3...comprised of a storage/discharging device or any other source of DC electric energy, and finally to change a charging current or stop charging to a load side storage/discharging device ESD0 commonly adapted to the DC sources ES1, ES2, ES3...etc. ;
- An isolating diode CR0: comprised of a solid-state rectifying diode to be individually connected in series with the output terminal of each DC source so to prevent the formation of inverse current by its neighboring DC source of higher voltage; within, the isolating diode CR0 is optional on the output side of the DC source of the highest step, and the isolating diode CR0 is not required when the mechanic-electronic or the solid-state switching devices SS1, SS2, SS3...is each provided with inherited inverse voltage withstanding feature;
- A load side storage/discharging device ESD0: related to the storage/discharging device provided on the load side being charged that is comprised of any type of (dis)chargeable secondary batteries or super capacitor;
- A manual operation interface MD1: related to a digital or analog manual operation interface comprised of mechanic-electronic or solid-state electronic circuit subject to manual operation for the control of the charging circuit of storage/discharging device of multi-differential source of the present invention by referring to resultant values from the load voltage device VD1, the load current detection device ID1 and load temperature detection device TS1 to control the mechanic-electronic or solid-state switching device of the switching device unit SSS101, thus further to control the operation of the step voltage DC source DCSS101 to charge or stop charging the storage/discharging device when the preset time is up by way of setting the automatic cut-off time or by control of the software;
- A charging source CP101: comprised of multi-phase or single phase AC rectified DC source, or of DC source so that when DC sources ES1, ES2, ES3...etc of multiple units of voltage are comprised of the storage/discharging device, a make-up charging electric energy is supplied to the storage/ discharging device ESD0 from the charging source CP101;
- A load side voltage detection device VD1: related to a digital or analog voltage detection device comprised of mechanic-electronic or solid-state electronic circuit for detecting the terminal voltage of load side storage/discharging device ESD0 and for numeric display;
- A load current detection device ID1: related to a digital or analog current detection device comprised of mechanic-electronic or solid-state electronic circuit for detecting the input/output current of load side storage/discharging device ESD0 and for numeric display;
- A load temperature detection device TS1: an optional load temperature detection device comprised of non-contact type such as infrared induction or contact type detection device including thermal coupler, or positive or negative temperature coefficient detection device for detecting the temperature of the load side storage/discharging device ESD0 and for numeric display;
- An interface connector or plug/socket unit P0: an optional device comprised of a mechanic-electronicstructure,within, one terminal connecting the power side charging source and related circuits, and the other terminal relatively coupled being conducted to the load side storage/discharging device ESD0 and related circuits, or is provided at the same time with the function of electro-mechanical or electronic or mechanical specific ID code;
- A mains circuit breaker NFB101 : an optional device comprised of an over current circuit breaker operated by manual or by thermal drive or by electromagnetic or flow force to be connected in series on the output side of the mains; and
- A load side over-current circuit breaker NFB0: an optional device comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

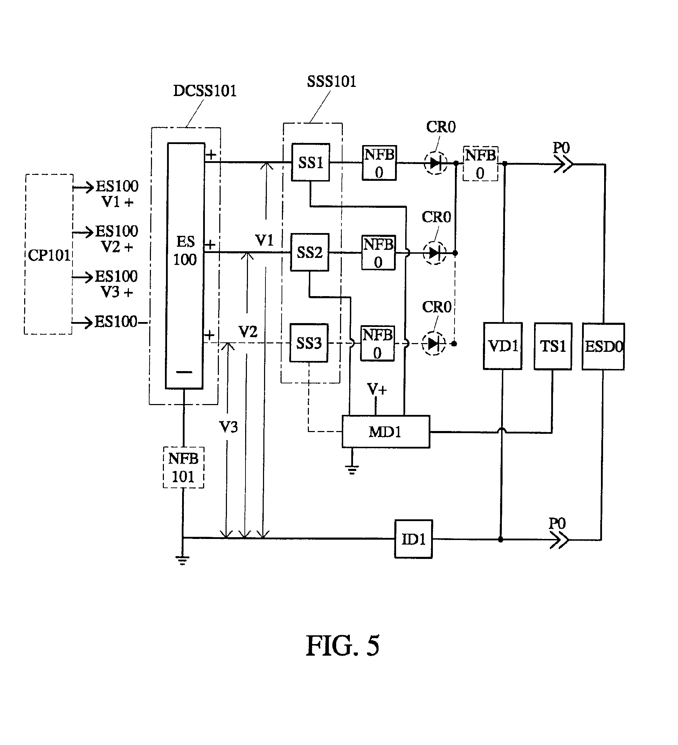

The step voltage DC source illustrated in Fig. 4 may be as illustrated in Fig. 5 replaced by a step voltage DC source ES100 with various voltage draws comprised of a storage/discharging device such as (dis) chargeable batteries or super capacitor, or any other DC source provided with DC electric energy; wherein, voltages of those voltage draws are in the order of V1>V2>V3... and so on.

Fig. 5 shows a block chart of a manually controlled and operated circuit of DC source comprised of the DC source of step voltage with various voltage draws derived from the preferred embodiment of the present invention illustrated in Fig. 4, wherein, peripheral circuits and control operation are the same that illustrated in Fig. 4.

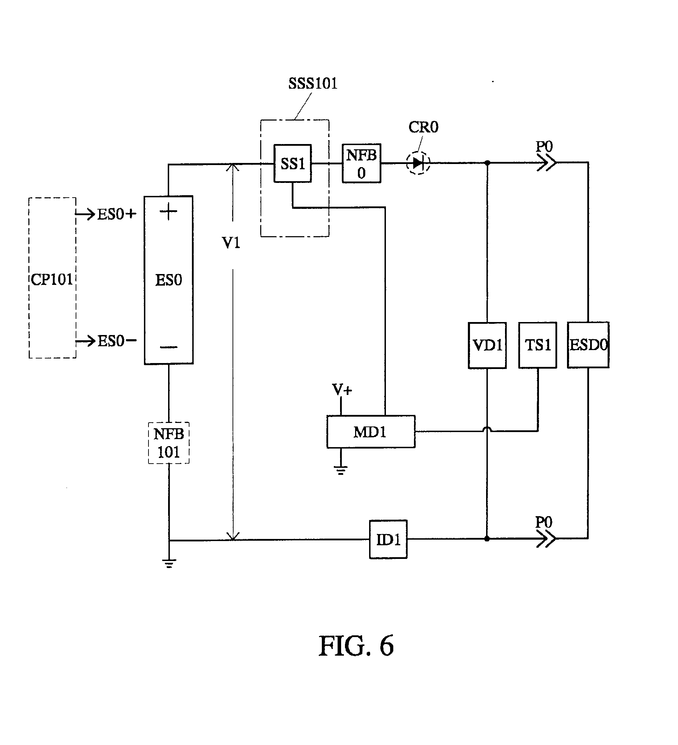

The step voltage DC source can be further replaced by a storage/ discharging device ES0 such as single voltage (dis)chargeable secondary batteries or super capacitor as illustrated in Fig. 6. Fig. 6 shows a block chart of a manually controlled and operated circuit of DC source comprised of storage/discharging device of a single voltage (dis)chargeable secondary batteries or a super capacitor derived from the second preferred embodiment of the present invention illustrated in Fig. 4, and is essentially comprised of:
- A single voltage DC source: comprised of a storage/ discharging device ES0 e.g., (dis)chargeable secondary batteries or super capacitor, with a given voltage;
- A unit of switching device SSS101: comprised of a mechanic-electronic or solid-state switching device SS1 to be connected in series with an output terminal of a storage/discharging device ES0 subj ect to control by a manual operation interface MD1 for on-off operation, thus to control the charging current of the load side storage/discharging device ESD0 for executing the control the time of charging input or intermittent charging input, or for stopping the charging;
- An isolating diode CR0: an optional device, comprised of a solid-state rectifying diode to be individually connected in series with the output terminal of each DC source;
- A load side storage/discharging device ESD0: related to the storage/discharging device provided on the load side being charged that is comprised of any type of (dis)chargeable secondary batteries or super capacitor;
- A manual operation interface MD1: related to a digital or analog manual operation interface comprised of mechanic-electronic or solid-state electronic circuit subject to manual operation for the control of the charging circuit ofstorage/discharging device of multi-differential source of the present invention by referring to resultant values from the load voltage device VD1, the load current detection device ID1 and load temperature detection device TS1 to control the mechanic-electronic or solid-state switching device SS1 of the switching device unit SSS101, thus further to control the operation of the load side storage/discharging device ESD0 for charging or stopping the charging; or to control the control switching device SSS101 when the preset time is up by means of manually controlled setting circuit or software, thus to control the charging current to the load side storage/discharging device ESD0 to execute the control of the time of charging input or intermittent charging input time or to stop charging;
- A charging source CP101: comprised of multi-phase or single phase AC rectified DC source, or of DC source for the charging source CP101 to supply make-up charging electric energy to the storage/ discharging device ES0, e.g. the (dis) chargeable secondary batteries or the super capacitor;
- A load side voltage detection device VD1 : related to a digital or analog current detection device, for detecting the input and output current of the load side load side storage/discharging device ESD0 and for numeric display;
- A load current detection device ID1: related to a digital or analog current detection device comprised of mechanic-electronic or solid-state electronic circuit for detecting the input/output current of load side storage/discharging device ESD0 and for numeric display;
- A load temperature detection device TS1: an optional load temperature detection device comprised of non-contact type such as infrared induction or contact type detection device including thermal coupler, or positive or negative temperature coefficient detection device for detecting the temperature of the load side storage/discharging device ESD0, and for numeric display;
- An interface connector or plug/socket unit P0: an optional devicecomprised ofa mechanic-electronicstructure,within, one terminal connecting the power side charging source and related circuits, and the other terminal relatively coupled being conducted to the load side storage/discharging device ESD0 and related circuits, or is provided at the same time with the function of electro-mechanical or electronic or mechanical specific ID code;
- A mains circuit breaker NFB101 : an optional device comprised of an over current circuit breaker operated by manual or by thermal drive or by electromagnetic or flow force to be connected in series on the output side of the mains; and
- A load side over-current circuit breakers NFB0: an optional device comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

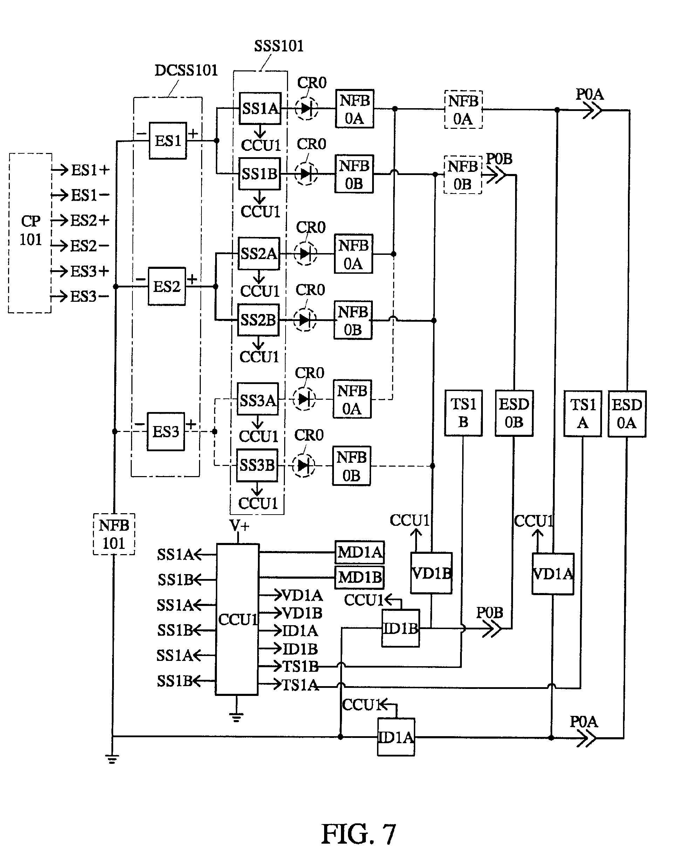

As illustrated in Fig. 7, the charging circuit of the storage/discharging device for multi-differential source of the present invention, depending on a given number specified, additional units of switching device SSS101, related interface connector or plug-socket units P0A, P0B..., load side voltage detection devices VD1A, VD1B..., load current detection devices ID1A, ID1B..., load side temperature detection devices TS1A, TS1b..., isolating diodes CR0..., manual operation interfaces MD1A, MD1B..., load side over current circuit breakers NFB0A, NFB0B..., and a common step voltage DC source DCSS101 may be provided, or the step voltage DC source DCSS101 at a number less than the load side storage/discharging devices ESD0A, ESD0B...being charged are provided; with the operation controlled by a common central control unit CCU1, or an individually by independent central control unit CCU1 so to respectively charge or stop charging individual load side storage/ discharging device in the number as required. Wherein, the operationmode for the multiple units of load side storage/discharging device is the same as that for a single unit. Fig. 7 shows a block chart of the present invention provided with multiple units of output circuit essentially comprised of:
- A step voltage DC source DCSS101: including DC sources ES1, ES2, ES3...of a given number of multiple units of storage/discharging device, e.g. a (dis)chargeable secondary batteries or a super capacitor or any other source containing direct current; within, the DC source ES1 has a greater voltage than that of ES2, and the DC source ES2 has a greater voltage than that of ES3, and so on if more step voltage DC sources are provided, or the step voltage DC source DCSS101 is comprised of DC source availed from single phase or multi-phase city power or AC generator source having been directly rectified or transformed, or other DC source;
- A unit of switching device SSS101 : comprised of a given number of mechanic-electronic orsolid-stateswitching devices SS1A, SS2A, SS3A...and SS1B, SS2B, SS3B... to be respectively connected in series with an output terminal of a storage/discharging device subject to control by a central control unit CCU1 for on-off operation, thus to control DC sources ES1, ES2, ES3...comprised of a storage/discharging device or any other source of DC electric energy, and finally to change a charging current or stop charging to the load side storage/discharging devices ESD0A, ESD0B commonly adapted to the DC sources ES1, ES2, ES3...etc. ;
- An isolating diode CR0: comprised a given number of solid-state rectifying diodes to be individually connected in series with the output terminal of each DC source so to prevent the formation of inverse current by its neighboring DC source of higher voltage; within, the isolating diode CR0 is optional on the output side of the DC source of the highest step, and the isolating diode CR0 is not required when the mechanic-electronic or the solid-state switching devices SS1, SS2, SS3...is each provided with inherited inverse voltage withstanding feature;
- Load side storage/discharging devices ESD0A, ESD0B: related to a given number of the storage/discharging device provided on the load side being charged that is comprised of any type of the same or the different (dis)chargeable secondary batteries or super capacitors;
- A central control unit CCU1: related to a given number of digital or analog central control circuit comprised of a mechanic-electronic or a solid-state electronic device, or a micro-processor and related software subject to operation and setup by manual operation interfaces MD1A, MD1B and by referring to feedback from the loading voltage detection devices VD1A, VD1B and the loading current detection devices ID1A, ID1B and the loading temperature detection device TS1A and TS1B to control the operation of a mechanical-electronic or a solid-state switching device of the switching device unit SSS101, thus to control the operation of the step voltage DC source DCSS101 to charge or stop charging the storage/discharging device; or to control the operation of the step voltage DC source DCSS101 to charge or stop charging the storage/discharging device when the preset time is up by way of setting the automatic cut-off time or by control of the software;
- Manual operation interfaces MD1A, MD1B: related to a given number of digital or analog manual operation interfaces comprised of mechanic-electronic or solid-state electronic circuits respectively subject to manual operation for the control of the charging circuit of storage/discharging device of multi-differential source of the present invention through the central control unit CCU1 to specify the charging to the load side storage/discharging devices ESD0A, ESD0B; or to control the operation of the step voltage DC source DCSS101 to charge or stop charging the storage/discharging device when the preset time is up by way of setting the automatic cut-off time or by control of the software;
- A charging source CP101: comprised of multi-phase or single phase AC rectified DC source, or of DC source so that when DC sources ES1, ES2, ES3...etc of multiple units of voltage are comprised of the storage/discharging device, a make-up charging electric energy is supplied to the storage/ discharging device from the charging source CP101;
- Load side voltage detection devices VD1A, VD1B: related to a given number of digital or analog voltage detection device comprised of mechanic-electronic or solid-state electronic circuits for detecting the terminal voltages of load side storage/discharging devices ESD0A, ESD0B and delivering the terminal voltage to the central control unit CCU1; the load side voltage detection devices VD1A and VD1B are optional;
- Load current detection device ID1A, ID1B: related to given number of digital or analog current detection devices comprised of mechanic-electronic or solid-state electronic circuits for detecting the input/output currents of load side storage/discharging devices ESD0A, ESD0B and delivering the input/output current to the central control unit CCU1; the load side voltage detection devices VD1A and VD1B are optional;
- Load temperature detection devices TS1A, TS1B: comprised of non-contact type such as infrared induction or contact type detection device including thermal coupler, or positive or negative temperature coefficient detection device for detecting the temperatures of the load side storage/discharging devices ESD0A, ESD0B, then the reading is either forthwith transmitted or via a digital or analog circuit comprised of related circuits incorporated to the central control unit CCU1, the load temperature detection devices TS1A and TS1B are optional;
- Interface connector or plug/socket units P0A, P0B: comprised of a mechanic-electronic structure with a given number of conduction contact or plug-socket units and are optional devices, within, one terminal connecting the power side charging source and related circuits, and the other terminal relatively coupled being conducted to the load side storage/discharging devices ESDA, ESDB and their related circuits, or is provided at the same time with the function of electro-mechanical or electronic or mechanical specific ID code;
- Amains circuit breaker NFB101: an optional device comprised of an over current circuit breaker operated by manual or by thermal drive or by electromagnetic or flow force to be connected in series on the output side of the mains; and
- Load side over-current circuit breaker NFB0A, NFB0B: optional devices each comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

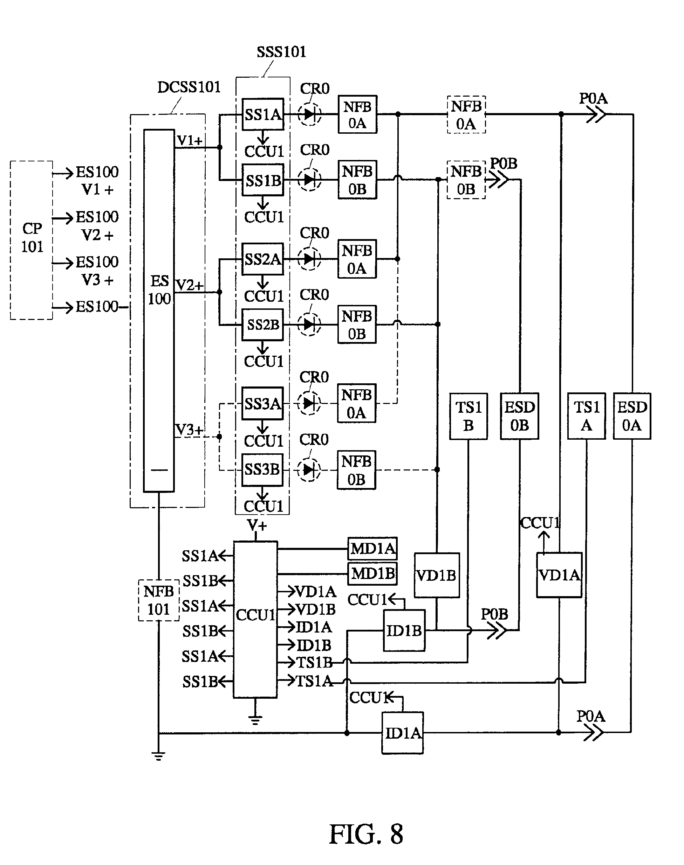

The step voltage DC source as illustrated in Fig. 7 can be further replaced, as illustrated in Fig. 8, by a storage/discharging device, or any other step voltage DC source ES100 of various voltage draws with a given number of draw comprised of other DC source containing DC electric energy with the values of the voltage draws indicating V1>V2>V3.... Fig. 8 shows a schematic view of a block chart of multiple units of output circuit of DC source comprised of step voltage DC sources with various voltage draws derived from the preferred embodiment illustrated in Fig. 7.

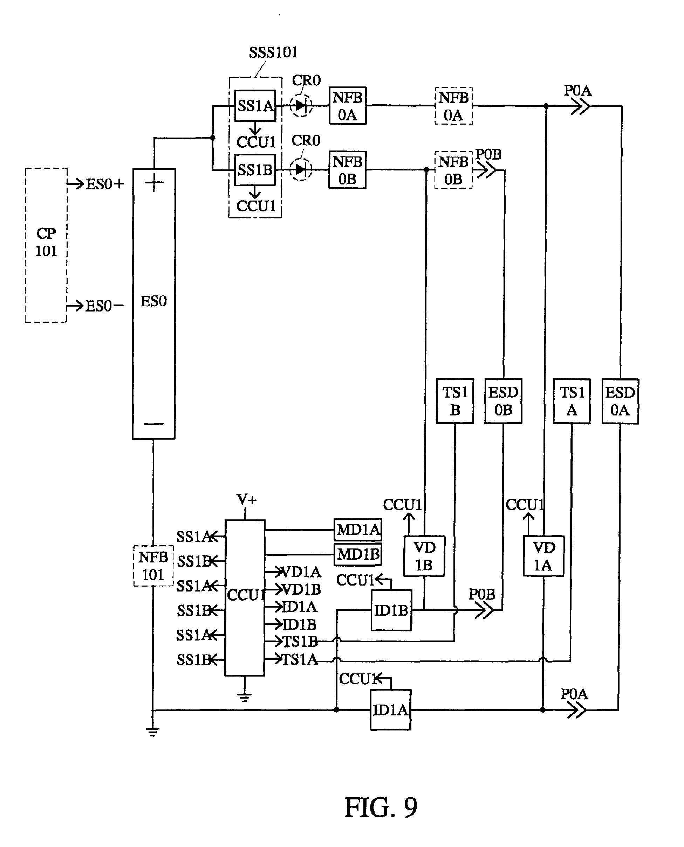

The step voltage DC source as illustrated in Fig. 7 can be even further replaced by a storage/discharging device ES0, e.g. single voltage (dis)chargeable secondary batteries or super capacitor as illustrated in Fig. 9. Fig. 9 shows a schematic view of a block chart of a multiple unit of output circuit of a DC source comprised of a storage/discharging device of a single voltage (dis)chargeable secondary batteries or a super capacitor derived from the third preferred embodiment of the present invention illustrated in Fig. 7. The circuit in Fig. 9 is essentially comprised of:
- A single voltage DC source: comprised of a storage/ discharging device, e.g. (dis)chargeable secondary batteries or super capacitor with a given voltage;
- A unit of switching device SSS101 : comprised of a given number of mechanic-electronic orsolid-stateswitching devices SS1A and SS1B...to be respectively connected in series with an output terminal of a storage/discharging device ES0 subject to control by a central control unit CCU1 for on-off operation, thus to control the charging current to the load side storage/discharging devices ESD0A, ESD0B...for executing the control of the time of charging input or intermittent charging input or for stopping the charging;
- An isolating diode CR0: comprised a given number of solid-state rectifying diodes to be individually connected in series with the output terminal of each DC source, the isolating diode CR0 is operation;
- Load side storage/discharging devices ESD0A, ESD0B: related to a given number of the storage/discharging device provided on the load side being charged that is comprised of any type of the same or the different (dis)chargeable secondary batteries or super capacitors;
- A central control unit CCU1: related to a given number of digital or analog central control circuit comprised of a mechanic-electronic or a solid-state electronic device, or a micro-processor and related software subject to operation and setup by manual operation interfaces MD1A, MD1B and by referring to feedback from the loading voltage detection devices VD1A, VD1B and the loading current detection devices ID1A, ID1B and the loading temperature detection device TS1A and TS1B to control the operation of a mechanical-electronic or a solid-state switching device of the switching device unit SSS101, thus to control the operation of the storage/discharging device ES0, e.g. the (dis)chargeable secondary batteries or the super capacitor to charge or stop charging the storage/discharging device; or to control the operation of the switching device unit SSS101 when the preset time is up by way of setting the automatic cut-off time or by control of the software, thus to further control the charging current to the load side storage/discharging devices ESDA, ESDB for executing the control of the time of charging input or the intermittent charging input, or for stopping the charging;
- Manual operation interfaces MD1A, MD1B: related to a given number of digital or analog manual operation interfaces comprised of mechanic-electronic or solid-state electronic circuits respectively subject to manual operation for the control of the charging circuit through the central control unit CCU1 to specify the charging to the load side storage/discharging devices ESD0A, ESD0B; or to control the operation of the switching device unit SSS101 when the preset time is up by way of setting the automatic cut-off time or by control of the software, thus to further control the charging current to the load side storage/discharging devices ESDA, ESDB for executing the control of the time of charging input or the intermittent charging input time, or for stopping the charging;
- A charging source CP101: comprised of multi-phase or single-phaseAC rectified DC source, or of DC source to supply a make-up charging electric energy to the storage/discharging device ES0;
- Load side voltage detection devices VD1A, VD1B: related to a given number of digital or analog voltage detection device comprised of mechanic-electronic or solid-state electronic circuits for detecting the terminal voltages of load side storage/discharging devices ESD0A, ESD0B for delivering to the central control unit CCU1; the load side voltage detection devices VD1A and VD1B are optional;
- Load current detection device ID1A. ID1B: related to given number of digital or analog current detection devices comprised of mechanic-electronic or solid-state electronic circuits for detecting the input/output currents of load side storage/discharging devices ESD0A, ESD0B for delivering to the central control unit CCU1; the load side voltage detection devices VD1A and VD1B are optional;
- Load temperature detection devices TS1A, TS1B: comprised of non-contact type such as infrared induction or contact type detection device including thermal coupler, or positive or negative temperature coefficient detection device for detecting the temperatures of the load side storage/discharging devices ESD0A, ESD0B, then the reading is either forthwith transmitted or via a digital or analog circuit comprised of related circuits incorporated to the central control unit CCU1, the load temperature detection devices TS1A and TS1B are optional;
- Interface connector or plug/socket units P0A, P0B: comprised of a mechanic-electronic structure with a given number of conduction contact or plug-socket units and are optional devices, within, one terminal connecting the power side charging source and related circuits, and the other terminal relatively coupled being conducted to the load side storage/discharging devices ESDA, ESDB and their related circuits, or is provided at the same time with the function of electro-mechanical or electronic or mechanical specific ID code;
- Amains circuit breaker NFB101: an optional device comprised of an over current circuit breaker operated by manual or by thermal drive or by electromagnetic or flow force to be connected in series on the output side of the mains; and
- Load side over-current circuit breakers NFB0A, NFB0B: optional devices each comprised of an over current circuit breaker operated by manual or by thermal drive or by electromagnetic or flow force to be respectively connected in series with individual output terminal of each unit of DC source, or is provided to be outputted to the output terminal on the load side storage/discharging devices ESD0A, ESD0B; the load side over-current circuit breakers NFB0A and NFB0B are option.

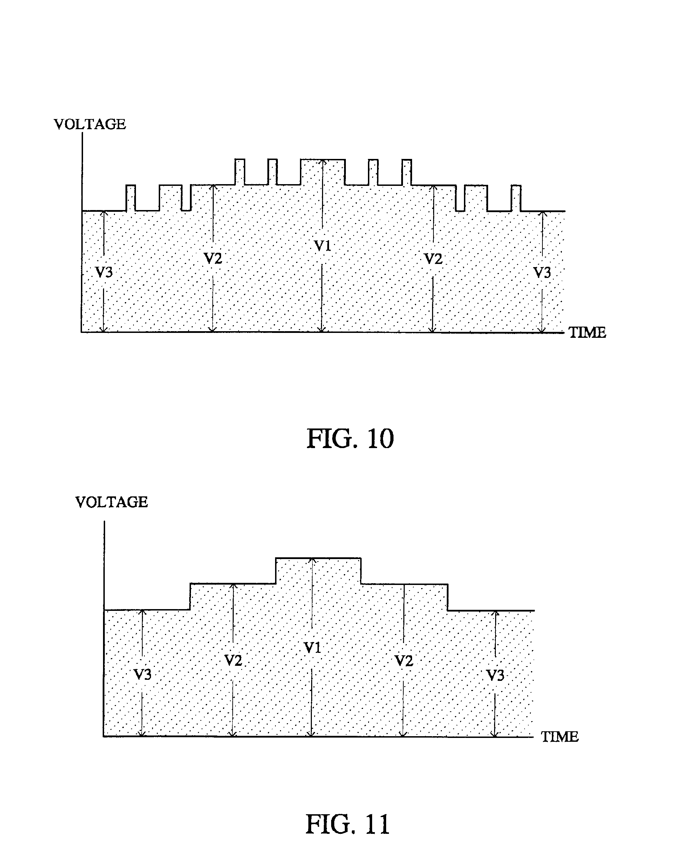

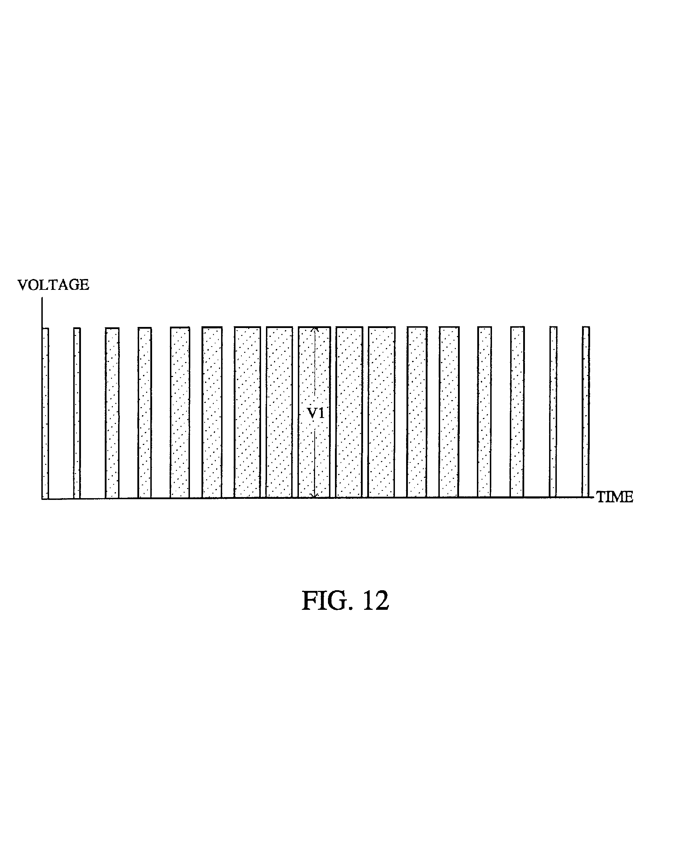

Output operation modes of the charging circuit of the multi-differentialsourcestorage/discharging device include:
(A) The output voltage in the process of charging by the charging source features step variation between LV and HV: In this mode, charging current and the terminal voltage of the load side storage/discharging device ESD0 being charged, and the temperature rise status of the load side storage/ discharging device ESD0 are referred, or by controlling the operation of a circuit or software to set up the time for automatic cutoff, the operation of the step voltage DC source DCSS101 is controlled to charge or to stop charging the storage/discharging device when the preset time is up; or by a manually controlled setup circuit or software to control the operation of the step voltage DC source DCSS101 to charge or to stop charging the storage/discharging device when the preset time is up; or by means of the central control unit CCU1 and/or the manual operation interface MD1 to execute control of the operation of the step voltage control and adjustment; as illustrated in Fig. 10, a schematic view shows the mode of the step variation between LV and HV of the output voltage being charged by the present invention;
(B) The charging output voltage of the charging source refers to the charging current and the terminal voltage of the load side storage/discharging device ESD0 being charged, and the temperature rise of the load side storage/ discharging device ESD0 for indicating at the same time alternative output with the neighboring HV and LV sources and the output with a proportional cycle adjustable and controllable in the course of charging output from the step voltage variation executed between LV and HV, and by controlling the operation of the time ratio of conduction between LV and HV, or by controlling the operation of a circuit or software to set up the time for automatic cutoff, the operation of the step voltage DC source DCSS101 is controlled to charge or to stop charging the storage/discharging device when the preset time is up; or by a manually controlled setup circuit or software to control the operation of the step voltage DC source DCSS101 to charge or to stop charging the storage/discharging device when the preset time is up; or by means of the central control unit CCU1 and/or the manual operation interface MD1 to execute the approximately linear voltage output; as illustrated in Fig. 11, a schematic view shows the mode of executing a lineal voltage variation with a proportional cycle adjustable and controllable between the LV and HV sources of the charging output by the charging source of the present invention; and
(C) The charging source may be from a single voltage DC source comprised of the storage/discharging device ES0, e.g. the (dis)chargeable secondary batteries or the super capacitor, the output voltage being charged indicates the pulse-width modulation (PWM) output control, i.e. by referring to the charging current and the terminal voltage of the load side storage/ discharging device ESD0 being charged and the temperature rise status of the load side storage/discharging device ESD0 to control the time respectively of conduction and cut-off under the power control of the pulse width modulation (PWM) for executing the approximately linear voltage output, or by controlling the operation of a circuit or software to set up the time for automatic cutoff, the operation of the switching device unit SSS101 is controlled to further control the charging current of the load side storage/discharging device ESD0 to execute the control of the time of charging input or intermittent charging input when the preset time is up; or by a manually controlled setup circuit or software to control the operation of the switching device unit SS101 thus further to control the charging current of the load side storage/discharging device ESD0 when the preset time is up; or by means of the central control unit CCU1 and/or the manual operation interface MD1 to execute the control of the charging current of the load side storage/ discharging device ESD0 for executing the control of the time of charging input or intermittent charging input, or for stopping the charging; as illustrated in Fig. 12, a schematic view shows the mode of executing a pulse width modulation (PWM) output voltage control of the output voltage being charged from the charging source of the present invention.

To sum up, the charging circuit of the multi-differential source storage/discharging device disclosed controls the operation of those control switches respectively connected in series with each unit of DC source by detecting the charging current side and the terminal voltage of the load side storage/discharging device being charged, e.g. the (dis)chargeable secondary batteries or the super capacitor to change its charging voltage for adjusting and controlling its charging voltage or charging current or cutting off the charging current, or by setting up the time for automatic cutoff via the central control unit or the manual operation interface to change its charging voltage for adjusting and controlling its charging voltage or charging current or cutting off the charging current when the pre-set time is up. The present invention offers advantages of convenient assembly, low EMI and low cost, and more particularly,the (dis)chargeable secondary batteries being used as the charging source eliminates the risk of interrupted city power. Therefore this application is duly filed accordingly.

## Claims

1. A charging circuit of multi-differential source storage/discharging device relates to a DC source with multiple units of step voltage respectively connected in series with mechanic-electronic or solid-state switching device to form a unit of switching device to constitute one terminal of a charging source at the output terminal of the unit of switching device to be set by means of a manually controlled interface; and feedback signals comprised that of a charging current of a storage/discharging device on a load side being charged together with that of voltage and temperature rise from the charging terminal are transmitted to a central control unit, where in turn a switching operation is executed by a corresponding mechanic-electronic or the solid-state switching device provided in the central control unit to change its charging voltage and charging current values to the storage/discharging device or cut off the charging source delivered to the storage/discharging device when the charging is saturated or arrives at the preset temperature rise;
The mechanic-electronic or solid-state switching device connected in series with each step voltage DC source can be further comprised of two or more than two mechanic-electronic or solid-state switching devices are connected in parallel, then individually connected in series with each step voltage DC source; within, each unit of the mechanic-electronic or solid-state switching devices connected in parallel and then in series with the individual step voltage DC source constitutes a common unit of switching device and a common output terminal of the charging circuit; furthermore, the multiple units of mechanic-electronic or solid-state switching devices are connected in parallel, then individually connected in series with each step voltage DC source further constitutes multiple units of switching devices to from a charging source of multiple units of output.

2. A charging circuit of multi-differential source storage/discharging device as claimed in Claim 1, essentially comprised of:
- A step voltage DC source DCSS101: including DC sources ES1, ES2, ES3...of various voltage comprised of multiple units of storage/discharging device of a (dis)chargeable secondary batteries or a super capacitor or any other source containing direct current; within, the DC source ES1 has a greater voltage than that of ES2, and the DC source ES2 has a greater voltage than that of ES3, and so on if more step voltage DC sources are provided, or the step voltage DC source DCSS101 is comprised of DC source availed from single phase or multi-phase city power or AC generator source having been directly rectified or transformed, or other DC source;
- A unit of switching device SSS101: comprised of a mechanic-electronic or solid-state switching device SS1, SS2, SS3...etc. to be respectively connected in series with an output terminal of a storage/discharging device subject to control by a central control unit CCU1 for on-off operation, thus to control DC sources ES1, ES2, ES3...comprised of a storage/discharging device or any other source of DC electric energy, and finally to change a charging current or stop charging to a load side storage/discharging device ESD0 commonly adapted to the DC sources ES1, ES2, ES3... etc.;
- An isolating diode CR0: comprised of a solid-state rectifying diode to be individually connected in series with the output terminal of each DC source so to prevent the formation of inverse current by its neighboring DC source of higher voltage; within, the isolating diode CR0 is optional on the output side of the DC source of the highest step, and the isolating diode CR0 is not required when the mechanic-electronic or the solid-state switching devices SS1, SS2, SS3...is each provided with inherited inverse voltage withstanding feature;
- A load side storage/discharging device ESD0: related to the storage/discharging device provided on the load side being charged that is comprised of any type of (dis)chargeable secondary batteries or super capacitor;
- A central control unit CCU1: related to a digital or analog central control circuit comprised of a mechanic-electronic or a solid-state electronic device, or comprised of a micro-processor and related software subject to operation and setup by a manual operation interface MDland by referring to feedback from a loading voltage detection device VD1, a loading current detection device ID1 and a loading temperature detection device TS1 to control the operation of a mechanical-electronic or a solid-state switching device of the unit of the switching device SSS101, thus to control the operation of the step voltage DC source DCSS101 to charge or stop charging the storage/discharging device; or to control the operation of the step voltage DC source DCSS101 to charge or stop charging the storage/discharging device when the preset time is up by way of setting the automatic cut-off time or by control of the software;
- A manual operation interface MD1 : related to a digital or analog manual operation interface comprised of mechanic-electronic or solid-state electronic circuit subject to manual operation for the control of the charging circuit of storage/discharging device of multi-differential source of the present invention through the central control unit CCU1 to specify the charging to the load side storage/discharging device ESD0; or to control the operation of the step voltage DC source DCSS101 to charge or stop charging the storage/discharging device when the preset time is up by way of setting the automatic cut-off time or by control of the software;
- A charging source CP101: comprised of multi-phase or single phase AC rectified DC source, or of DC source so that when DC sources ES1, ES2, ES3...etc of multiple units of voltage are comprised of the storage/discharging device, a make-up charging electric energy is supplied to the storage/ discharging device from the charging source CP101;
- A load side voltage detection device VD1: related to a digital or analog voltage detection device comprised of mechanic-electronic or solid-state electronic circuit for detecting the terminal voltage of load side storage/discharging device ESD0 and delivering the terminal voltage to the central control unit CCU1; the load side voltage detection device VD1 is optional;
- A load current detection device ID1: related to a digital or analog current detection device comprised of mechanic-electronic or solid-state electronic circuit for detecting the input/output current of load side storage/discharging device ESD0 and delivering the input/output current to the central control unit CCU1; the load side voltage detection device VD1 is optional;
- A load temperature detection device TS1: an optional load temperature detection device comprised of non-contact type such as infrared induction or contact type detection device including thermal coupler, or positive or negative temperature coefficient detection device for detecting the temperature of the load side storage/discharging device ESD0, then the reading is either forthwith transmitted or via a digital or analog circuit comprised of related circuits incorporated to the central control unit CCU1;
- An interface connector or plug/socket unit P0: an optional device comprised of a mechanic-electronic structure, within, one terminal connecting the power side charging source and related circuits, and the other terminal relatively coupled being conducted to the load side storage/discharging device ESD0 and related circuits, or is provided at the same time with the function of electro-mechanical or electronic or mechanical specific ID code;
- A mains circuit breaker NFB101: an optional device comprised of an over current circuit breaker operated by manual or by thermal drive or by electromagnetic or flow force to be connected in series on the output side of the mains; and
- A load side over-current circuit breaker NFB0: an optional device comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

3. A charging circuit of multi-differential source storage/discharging device as claimed in Claim 2, wherein, the step voltage DC source is further substituted by a storage/discharging device of (dis)chargeable secondary batteries or super capacitor, or other step voltage DC source ES100 of various voltage draw comprised of a DC source provided with DC electric energy and voltages of the various voltage draws indicate V1>V2/V3... and so on.

4. A charging circuit of multi-differential source storage/discharging deviceasclaimedin Claim2,wherein, the step voltage DC source is further replaced by a storage/discharging device ES0 of (dis)chargeable secondary batteries or super capacitor, essentially comprised of:
- A single voltage DC source: comprised of a storage/discharging device of (dis)chargeable secondary batteries or super capacitor with a given voltage;
- A unit of switching device SSS101: comprised of the mechanic-electronic or solid-state switching device SS1 to be connected in series for operation with the output terminal of the storage/discharging device ES0 of (dis)chargeable secondary batteries or super capacitor, and to execute On-Off operation subject to the central control unit CCU1 so to control the charging current supplied to the load side storage/discharging device ESD0 to execute the control of the time of charging input or intermittent charging input or to stop the charging;
- An isolating diode CR0: comprised of a solid-state rectifying diode to be individually connected in series with the output terminal of each DC source so to prevent the formation of inverse current by its neighboring DC source of higher voltage; within, the isolating diode CR0 is optional on the output side of the DC source of the highest step, and the isolating diode CR0 is not required when the mechanic-electronic or the solid-state switching devices SS1, SS2, SS3... is each provided with inherited inverse voltage withstanding feature;
- A load side storage/discharging device ESD0: related to the storage/discharging device provided on the load side being charged that is comprised of any type of (dis)chargeable secondary batteries or super capacitor;
- A central control unit CCU1: related to a digital or analog central control circuit comprised of a mechanic-electronic or a solid-state electronic device, or comprised of a micro-processor and related software subject to operation and setup by a manual operation interface MDland by referring to feedback from a loading voltage detection device VD1, a loading current detection device ID1 and a loading temperature detection device TS1 to control the operation of a mechanical-electronic or a solid-state switching device of the unit of the switching device SSS101, thus to control the operation of the step voltage DC source DCSS101 to charge or stop charging the storage/discharging device; or to control the operation of the step voltage DC source DCSS101 to charge or stop charging the storage/discharging device when the preset time is up byway of setting the automatic cut-off time or by control of the software;
- A manual operation interface MD1: related to a digital or analog manual operation interface comprised of mechanic-electronic or solid-state electronic circuit subject to manual operation for the control of the charging circuit of storage/discharging device of multi-differential source of the present invention through the central control unit CCU1 to specify the charging to the load side storage/discharging device ESD0; or to control the operation of the step voltage DC source DCSS101 to charge or stop charging the storage/discharging device when the preset time is up by way of setting the automatic cut-off time or by control of the software;
- A charging source CP101: comprised of multi-phase or single phase AC source rectified DC source or a DC source for supplying make-up charging electric energy to the storage/discharging device ES0 of (dis)chargeable secondary batteries or super capacitor;
- A load side voltage detection device VD1: related to a digital or analog voltage detection device comprised of mechanic-electronic or solid-state electronic circuit for detecting the terminal voltage of load side storage/discharging device ESD0 and delivering the terminal voltage to the central control unit CCU1; the load side voltage detection device VD1 is optional;
- A load current detection device ID1: related to a digital or analog current detection device comprised of mechanic-electronic or solid-state electronic circuit for detecting the input/output current of load side storage/discharging device ESD0 and delivering the input/output current to the central control unit CCU1; the load side voltage detection device VD1 is optional;
- A load temperature detection device TS1: an optional load temperature detection device comprised of non-contact type such as infrared induction or contact type detection device including thermal coupler, or positive or negative temperature coefficient detection device for detecting the temperature of the load side storage/discharging device ESD0, then the reading is either forthwith transmitted or via a digital or analog circuit comprised of related circuits incorporated to the central control unit CCU1;
- An interface connector or plug/socket unit P0: an optional device comprised of a mechanic-electronic structure, within, one terminal connecting the power side charging source and related circuits, and the other terminal relatively coupled being conducted to the load side storage/discharging device ESD0 and related circuits, or is provided at the same time with the function of electro-mechanical or electronic or mechanical specific ID code;
- A mains circuit breaker NFB101: an optional device comprised of an over current circuit breaker operated by manual or by thermal drive or by electromagnetic or flow force to be connected in series on the output side of the mains; and
- A load side over-current circuit breaker NFB0: an optional device comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

5. A charging circuit of multi-differential source storage/discharging device asclaimedin Claim 1, wherein, the central control unit CCU1 is removed and a mechanic-electronic or solid-state switching device for direct manual operation or a manual operation interface MD1 driven by manually controlled electromagnetic or mechanic or flow force is selected instead; so that during the manual operation, the operator refer to part or all the values read from the load voltage detection device VD1, the load current detect device ID1 and the load temperature detection device TS1, the either forthwith operated by manual or by means of the manual operation interface MD1 to control electromagnetic or mechanic or flow force to drive the mechanic-electronic or solid-state switching devices SS1, SS2, SS3...provided in the switching device SSS101, essentially comprised of:
- A step voltage DC source DCSS101: including DC sources ES1, ES2, ES3...of various voltage comprised of multiple units of storage/discharging device of a (dis)chargeable secondary batteries or a super capacitor or any other source containing direct current; within, the DC source ES1 has a greater voltage than that of ES2, and the DC source ES2 has a greater voltage than that of ES3, and so on if more step voltage DC sources are provided, or the step voltage DC source DCSS101 is comprised of DC source availed from single phase or multi-phase city power or AC generator source having been directly rectified or transformed, or other DC source;
- A unit of switching device SSS101: comprised of a mechanic-electronic or solid-state switching device SS1, SS2, SS3...etc. to be respectively connected in series with an output terminal of a storage/discharging device subject to control by the manual operation interface MD1 for on-off operation, thus to control DC sources ES1, ES2, ES3...comprised of a storage/discharging device or any other source of DC electric energy, and finally to change a charging current or stop charging to a load side storage/discharging device ESD0 commonly adapted to the DC sources ES1, ES2, ES3... etc.;
- An isolating diode CR0: comprised of a solid-state rectifying diode to be individually connected in series with the output terminal of each DC source so to prevent the formation of inverse current by its neighboring DC source of higher voltage; within, the isolating diode CR0 is optional on the output side of the DC source of the highest step, and the isolating diode CR0 is not required when the mechanic-electronic or the solid-state switching devices SS1, SS2, SS3...is each provided with inherited inverse voltage withstanding feature;
- A load side storage/discharging device ESD0: related to the storage/discharging device provided on the load side being charged that is comprised of any type of (dis)chargeable secondary batteries or super capacitor;
- A manual operation interface MD1 : related to a digital or analog manual operation interface comprised of mechanic-electronic or solid-state electronic circuit subject to manual operation for the control of the charging circuit of storage/discharging device of multi-differential source of the present invention by referring to resultant values from the load voltage device VD1, the load current detection device ID1 and load temperature detection device TS1 to control the mechanic-electronic or solid-state switching device of the switching device unit SSS101, thus further to control the operation of the step voltage DC source DCSS101 to charge or stop charging the storage/discharging device when the preset time is up by way of setting the automatic cut-off time or by control of the software;
- A charging source CP101: comprised of multi-phase or single phase AC rectified DC source, or of DC source so that when DC sources ES1, ES2, ES3...etc of multiple units of voltage are comprised of the storage/discharging device, a make-up charging electric energy is supplied to the storage/ discharging device from the charging source CP101;
- A load side voltage detection device VD1: related to a digital or analog voltage detection device comprised of mechanic-electronic or solid-state electronic circuit for detecting the terminal voltage of load side storage/discharging device ESD0 and for numeric display;
- A load current detection device ID1: related to a digital or analog current detection device comprised of mechanic-electronic or solid-state electronic circuit for detecting the input/output current of load side storage/discharging device ESD0 and for numeric display;
- A load temperature detection device TS1: an optional load temperature detection device comprised of non-contact type such as infrared induction or contact type detection device including thermal coupler, or positive or negative temperature coefficient detection device for detecting the temperature of the load side storage/discharging device ESD0 and for numeric display;
- An interface connector or plug/socket unit P0: an optional device comprised of a mechanic-electronic structure, within, one terminal connecting the power side charging source and related circuits, and the other terminal relatively coupled being conducted to the load side storage/discharging device ESD0 and related circuits, or is provided at the same time with the function of electro-mechanical or electronic or mechanical specific ID code;
- A mains circuit breaker NFB101: an optional device comprised of an over current circuit breaker operated by manual or by thermal drive or by electromagnetic or flow force to be connected in series on the output side of the mains; and
- A load side over-current circuit breaker NFB0: an optional device comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

6. A charging circuit of multi-differential source storage/discharging device asclaimedin Claim 5, wherein, the step voltage DC source illustrated is replaced by a step voltage DC source ES100 with various voltage draws comprised of a storage/discharging device such as (dis) chargeable batteries or super capacitor, or any other DC source provided with DC electric energy; wherein, voltages of those voltage draws are in the order of V1>V2>V3... and so on.

7. A charging circuit of multi-differential source storage/discharging device asclaimedin Claim 5, wherein, the step voltage DC source is further replaced by a storage/discharging device ES0 such as single voltage (dis)chargeable secondary batteries or super capacitor, essentially comprised of:
- A single voltage DC source: comprised of a storage/discharging device ES0 e.g., (dis)chargeable secondary batteries or super capacitor, with a given voltage;
- A unit of switching device SSS101: comprised of a mechanic-electronic or solid-state switching device SS1 to be connected in series with an output terminal of a storage/discharging device ES0 subject to control by a manual operation interface MD1 for on-off operation, thus to control the charging current of the load side storage/discharging device ESD0 for executing the control the time of charging input or intermittent charging input, or for stopping the charging;
- An isolating diode CR0: an optional device, comprised of a solid-state rectifying diode to be individually connected in series with the output terminal of each DC source;
- A load side storage/discharging device ESD0: related to the storage/discharging device provided on the load side being charged that is comprised of any type of (dis)chargeable secondary batteries or super capacitor;
- A manual operation interface MD1: related to a digital or analog manual operation interface comprised of mechanic-electronic or solid-state electronic circuit subject to manual operation for the control of the charging circuit of storage/discharging device of multi-differential source of the present invention by referring to resultant values from the load voltage device VD1, the load current detection device ID1 and load temperature detection device TS1 to control the mechanic-electronic or solid-state switching device SS1 of the switching device unit SSS101, thus further to control the operation of the load side storage/discharging device ESD0 for charging or stopping the charging; or to control the control switching device SSS101 when the preset time is up by means of manually controlled setting circuit or software, thus to control the charging current to the load side storage/discharging device ESD0 to execute the control of the time of charging input or intermittent charging input time or to stop charging;
- A charging source CP101: comprised of multi-phase or single phase AC rectified DC source, or of DC source for the charging source CP101 to supplymake-up charging electric energy to the storage/ discharging device ES0, e.g. the (dis)chargeable secondary batteries or the super capacitor;
- A load side voltage detection device VD1: related to a digital or analog current detection device, for detecting the input and output current of the load side load side storage/discharging device ESD0 and for numeric display;
- A load current detection device ID1: related to a digital or analog current detection device comprised of mechanic-electronic or solid-state electronic circuit for detecting the input/output current of load side storage/discharging device ESD0 and for numeric display;
- A load temperature detection device TS1: an optional load temperature detection device comprised of non-contact type such as infrared induction or contact type detection device including thermal coupler, or positive or negative temperature coefficient detection device for detecting the temperature of the load side storage/discharging device ESD0, and for numeric display;
- An interface connector or plug/socket unit P0: an optional device comprised of a mechanic-electronic structure, within, one terminal connecting the power side charging source and related circuits, and the other terminal relatively coupled being conducted to the load side storage/discharging device ESD0 and related circuits, or is provided at the same time with the function of electro-mechanical or electronic or mechanical specific ID code;
- A mains circuit breaker NFB101: an optional device comprised of an over current circuit breaker operated by manual or by thermal drive or by electromagnetic or flow force to be connected in series on the output side of the mains; and
- A load side over-current circuit breakers NFB0: an optional device comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

8. A charging circuit of multi-differential source storage/discharging device asclaimedin Claim 1, wherein, the charging circuit of the storage/discharging device for multi-differential source of the present invention, depending on a given number specified, additional units of switching device SSS101, related interface connector or plug-socket units P0A, P0B..., load side voltage detection devices VD1A, VD1B..., load current detection devices ID1A, ID1B..., load side temperature detection devices TS1A, TS1b..., isolating diodes CR0..., manual operation interfaces MD1A, MD1B..., load side over current circuit breakers NFB0A, NFB0B..., and a common step voltage DC source DCSS101 may be provided, or the step voltage DC source DCSS101 at a number less than the load side storage/discharging devices ESD0A, ESD0B...being charged are provided; with the operation controlled by a common central control unit CCU1, or an individually by independent central control unit CCU1 so to respectively charge or stop charging individual load side storage/ discharging device in the number as required and the operation mode for the multiple units of load side storage/discharging device is the same as that for a single unit, essentially comprised of:
- A step voltage DC source DCSS101: including DC sources ES1, ES2, ES3...of a given number of multiple units of storage/discharging device, e.g. a (dis)chargeable secondary batteries or a super capacitor or any other source containing direct current; within, the DC source ES1 has a greater voltage than that of ES2, and the DC source ES2 has a greater voltage than that of ES3, and so on if more step voltage DC sources are provided, or the step voltage DC source DCSS101 is comprised of DC source availed from single phase or multi-phase city power or AC generator source having been directly rectified or transformed, or other DC source;
- A unit of switching device SSS101 : comprised of a given number of mechanic-electronic orsolid-stateswitching devices SS1A, SS2A, SS3A...and SS1B, SS2B, SS3B... to be respectively connected in series with an output terminal of a storage/discharging device subject to control by a central control unit CCU1 for on-off operation, thus to control DC sources ES1, ES2, ES3...comprised of a storage/discharging device or any other source of DC electric energy, and finally to change a charging current or stop charging to the load side storage/discharging devices ESD0A, ESD0B commonly adapted to the DC sources ES1, ES2, ES3... etc.;
- An isolating diode CR0: comprised a given number of solid-state rectifying diodes to be individually connected in series with the output terminal of each DC source so to prevent the formation of inverse current by its neighboring DC source of higher voltage; within, the isolating diode CR0 is optional on the output side of the DC source of the highest step, and the isolating diode CR0 is not required when the mechanic-electronic or the solid-state switching devices SS1, SS2, SS3...is each provided with inherited inverse voltage withstanding feature;
- Load side storage/discharging devices ESD0A, ESDOB: related to a given number of the storage/discharging device provided on the load side being charged that is comprised of any type of the same or the different (dis)chargeable secondary batteries or super capacitors;
- A central control unit CCU1: related to a given number of digital or analog central control circuit comprised of a mechanic-electronic or a solid-state electronic device, or a micro-processor and related software subject to operation and setup by manual operation interfaces MD1A, MD1B and by referring to feedback from the loading voltage detection devices VD1A, VD1B and the loading current detection devices ID1A, ID1B and the loading temperature detection device TS1A and TS1B to control the operation of a mechanical-electronic or a solid-state switching device of the switching device unit SSS101, thus to control the operation of the step voltage DC source DCSS101 to charge or stop charging the storage/discharging device; or to control the operation of the step voltage DC source DCSS101 to charge or stop charging the storage/discharging device when the preset time is up by way of setting the automatic cut-off time or by control of the software;
- Manual operation interfaces MD1A, MD1B: related to a given number of digital or analog manual operation interfaces comprised of mechanic-electronic or solid-state electronic circuits respectively subject to manual operation for the control of the charging circuit of storage/discharging device of multi-differential source of the present invention through the central control unit CCU1 to specify the charging to the load side storage/discharging devices ESD0A, ESD0B; or to control the operation of the step voltage DC source DCSS101 to charge or stop charging the storage/discharging device when the preset time is up by way of setting the automatic cut-off time or by control of the software;
- A charging source CP101: comprised of multi-phase or single phase AC rectified DC source, or of DC source so that when DC sources ES1, ES2, ES3...etc of multiple units of voltage are comprised of the storage/discharging device, a make-up charging electric energy is supplied to the storage/ discharging device from the charging source CP101;
- Load side voltage detection devices VD1A, VD1B: related to a given number of digital or analog voltage detection device comprised of mechanic-electronic or solid-state electronic circuitsfor detecting the terminal voltages of load side storage/discharging devices ESD0A, ESD0B and delivering the terminal voltage to the central control unit CCU1; the load side voltage detection devices VD1A and VD1B are optional;
- Load current detection device ID1A, ID1B: related to given number of digital or analog current detection devices comprised of mechanic-electronic or solid-state electronic circuits for detecting the input/output currents of loadsidestorage/discharging devices ESD0A, ESD0B and delivering the input/output current to the central control unit CCU1; the load side voltage detection devices VD1A and VD1B are optional;
- Load temperature detection devices TS1A, TS1B: comprised of non-contact type such as infrared induction or contact type detection device including thermal coupler, or positive or negative temperature coefficient detection device for detecting the temperatures of the load side storage/discharging devices ESD0A, ESD0B, then the reading is either forthwith transmitted or via a digital or analog circuit comprised of related circuits incorporated to the central control unit CCU1, the load temperature detection devices TS1A and TS1B are optional;
- Interface connector or plug/socket units P0A, P0B: comprised of a mechanic-electronic structure with a given number of conduction contact or plug-socket units and are optional devices, within, one terminal connecting the power side charging source and related circuits, and the other terminal relatively coupled being conducted to the load side storage/discharging devices ESDA, ESDB and their related circuits, or is provided at the same time with the function of electro-mechanical or electronic or mechanical specific ID code;
- A mains circuit breaker NFB101: an optional device comprised of an over current circuit breaker operated by manual or by thermal drive or by electromagnetic or flow force to be connected in series on the output side of the mains; and
- Load side over-current circuit breaker NFB0A, NFB0B: optional devices each comprised of an over current circuit breaker operated by manual or by thermal drive or by electromagnetic or flow force to be respectively connected in series with individual output terminal of each unit of DC source, or is provided to be outputted to the common output terminal on the load side storage/discharging device of the common load.

9. A charging circuit of multi-differential source storage/discharging device as claimed in Claim8,wherein, the step voltage DC source is further replaced by a storage/discharging device, or any other step voltage DC source ES100 of various voltage draws with a given number of draw comprised of other DC source containing DC electric energy with the values of the voltage draws indicating V1>V2>V3....

10. A charging circuit of multi-differential source storage/discharging device as claimed in Claim8,wherein, the step voltage DC source is further replaced by a storage/discharging device ES0, e.g. single voltage (dis)chargeable secondary batteries or super capacitor as illustrated in Fig. 9. essentially comprised of:
- A single voltage DC source: comprised of a storage/discharging device, e.g. (dis)chargeable secondary batteries or super capacitor with a given voltage;
- A unit of switching device SSS101: comprised of a given number of mechanic-electronic orsolid-stateswitching devices SS1A and SS1B...to be respectively connected in series with an output terminal of a storage/discharging device ES0 subject to control by a central control unit CCU1 for on-off operation, thus to control the charging current to the load side storage/discharging devices ESD0A, ESD0B...for executing the control of the time of charging input or intermittent charging input or for stopping the charging;
- An isolating diode CR0: comprised a given number of solid-state rectifying diodes to be individually connected in series with the output terminal of each DC source, the isolating diode CR0 is operation;
- Load side storage/discharging devices ESD0A, ESD0B: related to a given number of the storage/discharging device provided on the load side being charged that is comprised of any type of the same or the different (dis)chargeable secondary batteries or super capacitors;
- A central control unit CCU1: related to a given number of digital or analog central control circuit comprised of a mechanic-electronic or a solid-state electronic device, or a micro-processor and related software subject to operation and setup by manual operation interfaces MD1A, MD1B and by referring to feedback from the loading voltage detection devices VD1A, VD1B and the loading current detection devices ID1A, ID1B and the loading temperature detection device TS1A and TS1B to control the operation of a mechanical-electronic or a solid-state switching device of the switching device unit SSS101, thus to control the operation of the storage/discharging device ES0, e.g. the (dis)chargeable secondary batteries or the super capacitor to charge or stop charging the storage/discharging device; or to control the operation of the switching device unit SSS101 when the preset time is up by way of setting the automatic cut-off time or by control of the software, thus to further control the charging current to the load side storage/discharging devices ESDA, ESDB for executing the control of the time of charging input or the intermittent charging input, or for stopping the charging;
- Manual operation interfaces MD1A, MD1B: related to a given number of digital or analog manual operation interfaces comprised of mechanic-electronic or solid-state electronic circuits respectively subject to manual operation for the control of the charging circuit through the central control unit CCU1 to specify the charging to the load side storage/discharging devices ESD0A, ESD0B; or to control the operation of the switching device unit SSS101 when the preset time is up by way of setting the automatic cut-off time or by control of the software, thus to further control the charging current to the load side storage/discharging devices ESDA, ESDB for executing the control of the time of charging input or the intermittent charging input time, or for stopping the charging;
- A charging source CP101: comprised of multi-phase or single-phase AC rectified DC source, or of DC source to supply a make-up charging electric energy to the storage/discharging device ES0;
- Load side voltage detection devices VD1A, VD1B: related to a given number of digital or analog voltage detection device comprised of mechanic-electronic or solid-state electronic circuitsfor detecting the terminalvoltages of load side storage/discharging devices ESD0A, ESD0B for delivering to the central control unit CCU1; the load side voltage detection devices VD1A and VD1B are optional;
- Load current detection device ID1A, ID1B: related to given number of digital or analog current detection devices comprised of mechanic-electronic or solid-state electronic circuits for detecting the input/output currents of load side storage/discharging devices ESD0A, ESD0B for delivering to the central control unit CCU1; the load side voltage detection devices VD1A and VD1B are optional;
- Load temperature detection devices TS1A, TS1B: comprised of non-contact type such as infrared induction or contact type detection device including thermal coupler, or positive or negative temperature coefficient detection device for detecting the temperatures of the load side storage/discharging devices ESD0A, ESD0B, then the reading is either forthwith transmitted or via a digital or analog circuit comprised of related circuits incorporated to the central control unit CCU1, the load temperature detection devices TS1A and TS1B are optional;
- Interface connector or plug/socket units P0A, P0B: comprised of a mechanic-electronic structure with a given number of conduction contact or plug-socket units and are optional devices, within, one terminal connecting the power side charging source and related circuits, and the other terminal relatively coupled being conducted to the load side storage/discharging devices ESDA, ESDB and their related circuits, or is provided at the same time with the function of electro-mechanical or electronic or mechanical specific ID code;
- A mains circuit breaker NFB101: an optional device comprised of an over current circuit breaker operated by manual or by thermal drive or by electromagnetic or flow force to be connected in series on the output side of the mains; and
- Load side over-current circuit breakers NFB0A, NFB0B: optional devices each comprised of an over current circuit breaker operated by manual or by thermal drive or by electromagnetic or flow force to be respectively connected in series with individual output terminal of each unit of DC source, or is provided to be outputted to the output terminal on the load side storage/discharging devices ESD0A, ESD0B; the load side over-current circuit breakers NFB0A and NFB0B are option.

11. A charging circuit of multi-differential source storage/discharging device asclaimedin Claim 1, wherein, a operation mode is **characterized by** that:
The charging current and the terminal voltage of the load side storage/discharging device ESD0 being charged, and the temperature rise status of the load side storage/ discharging device ESD0 are referred, or by controlling the operation of a circuit or software to set up the time for automatic cutoff, the operation of the step voltage DC source DCSS101 is controlled to charge or to stop charging the storage/discharging device when the preset time is up; or by a manually controlled setup circuit or software to control the operation of the step voltage DC source DCSS101 to charge or to stop charging the storage/discharging device when the preset time is up; or by means of the central control unit CCU1 and/or the manual operation interface MD1 to execute control of the operation of the step voltage control and adjustment.

12. A charging circuit of multi-differential source storage/discharging device asclaimedin Claim 1, wherein, another operation mode is **characterized by** that: In this mode, the charging current and the terminal voltage of the load side storage/discharging device ESD0 being charged, and the temperature rise of the load side storage/ discharging device ESD0 for indicating at the same time alternative output with the neighboring HV and LV sources and the output with a proportional cycle adjustable and controllable in the course of charging output from the step voltage variation executed between LV and HV are referred, and by controlling the operation of the time ratio of conduction between LV and HV, or by controlling the operation of a circuit or software to set up the time for automatic cutoff, the operation of the step voltage DC source DCSS101 is controlled to charge or to stop charging the storage/discharging device when the preset time is up; or by a manually controlled setup circuit or software to control the operation of the step voltage DC source DCSS101 to charge or to stop charging the storage/discharging device when the preset time is up; or by means of the central control unit CCU1 and/or the manual operation interface MD1 to execute the approximately linear voltage output.

13. A charging circuit of multi-differential source storage/discharging device as claimed in Claim 1, wherein, another operation mode yet is **characterized by** that: The charging source is from a single voltage DC source comprised of the storage/discharging device ES0, e. g. the (dis)chargeable secondary batteries or the super capacitor, the output voltage being charged indicates the pulse-width modulation (PWM) output control, i.e. by referring to the charging current and the terminal voltage of the load side storage/ discharging device ESD0 being charged and the temperature rise status of the load side storage/discharging device ESD0 to control the time respectively of conduction and cut-off under the power control of the pulse width modulation (PWM) for executing the approximately linear voltage output, or by controlling the operation of a circuit or software to set up the time for automatic cutoff, the operation of the switching device unit SSS101 is controlled to further control the charging current of the load side storage/discharging device ESD0 to execute the control of the time of charging input or intermittent charging input when the preset time is up; or by a manually controlled set-up circuit or software to control the operation of the switching device unit SS101 thus further to control the charging current of the load side storage/discharging device ESD0 when the pre-set time is up; or by means of the central control unit CCU1 and/or the manual operation interface MD1 to execute the control of the charging current of the load side storage/discharging device ESD0 for executing the control of the time or charging input or intermittent charging input, or for stopping the charging.

14. A storage/discharge device charging circuit for multiple units of a step differential DC source for detecting the charging current and terminal voltage of a storage/discharge device, or for detecting the charging temperature so as to control operation of control switches respectively connected in series with each unit of the DC source to change charging voltage or charging current to the storage/discharge device, the circuit having a central control unit or a manually-controlled interface to set up the automatic cut-off time to change its charging voltage when a pre-set time is up so as to adjust and control its charging current or cut-off current.
